# EUROPEAN PATENT SPECIFICATION

(11) **EP 4 537 486 B1**
(45) Date of publication and mention of the grant of the patent: **04.02.2026**
(21) Application number: 23732215.1
(22) Date of filing: 30.05.2023
(51) Int. Cl.: H04L 9/32

(54) **METHOD AND SYSTEM FOR THE UNEQUIVOCAL CHARACTERIZATION OF A PRODUCT BY MEANS OF AN INTELLIGENT PAINT**
VERFAHREN UND VORRICHTUNG FÜR DIE EINDEUTIGE KENNZEICHNUNG EINES PRODUKTS MITTELS EINES INTELLIGENTEN LACKS
PROCÉDÉ ET SYSTÈME DE CARACTÉRISATION DE PRODUIT UNIVOQUE PAR L'INTERMÉDIAIRE D'UNE PEINTURE INTELLIGENTE

(30) Priority: 09.06.2022 IT 202200012245
(43) Date of publication of application: 16.04.2025
(73) Proprietor: NATIVE DIGITAL S.A., 6814 Cadempino Ticino (CH)
(72) Inventor: BIONDI, Davide, 6814 Cadempino Ticino (CH); BIONDI, Andrea, 6814 Cadempino Ticino (CH)
(74) Representative: Perronace, Andrea
(86) International application number: PCT/IB2023/055523
(87) International publication number: WO 2023/237964

(56) References cited:
- CN-A- 103 065 109
- US-A1- 2006 180 647

## Description

The present invention relates to a method and system for univocal product characterization through a smart paint.

### Background art

Classes of non-invertible mathematical functions are known, which map digital data of arbitrary length in a string of defined length, known as hashing functions or hash functions. Many algorithms exist which perform said functions with particular properties that depend on the application. In cryptographic applications the hash function must have the following properties: (a) pre-image resistance: it should be computationally infeasible to find an input string that provides a hash the same as a given hash; (b) second pre-image resistance: it should be computationally infeasible to find an input string that provides a hash the same as that of a given string; (c) collision resistance: it should be computationally infeasible to find a pair of input strings that provide the same hash. Hash algorithms satisfy the following requirements: (a) the output consists of numbers and letters and it is referred to as a message digest (fingerprint of the message) generated based on any bitstream of any size; (b) the algorithm is not invertible, i.e., the original data cannot be reconstructed from the output, i.e., it is a one-way function. Therefore, there is no two-way correspondence between the hash and the starting data. Considering that there are more possible strings of data with finite dimension than the hash, because of the "pigeonhole principle", various possible strings correspond to at least one hash. When two strings produce the same hash, we talk about collision, and the quality of a hash function is measured according to the difficulty in identifying two strings that generate a collision. A cryptographically secure hash should not allow the string that could generate it to be find in a period of time comparable with the use of the hash itself. The length of the hash values varies according to the algorithms used. The most commonly adopted value is 128 bit, which offers good reliability in a relatively small space, according to the calculation capacity of today's computers. For example the SHA (Secure Hash Algorithm) indicates a family of functions to which different variants belong: SHA-1, SHA-224, SHA-256, SHA-384 and SHA-512. The last four variants are often generally indicated as SHA-2, to distinguish them from the first. The first produces a digest of the message of only 160 bit, whereas the others produce a digest with a bit length equal to the number indicated in their abbreviation (i.e. SHA-256 produces a digest of 256 bit) . Hash functions perform an essential role in cryptography: they are useful for verifying the integrity of a certain string of data, as the execution of the algorithm on a string that is even slightly modified provides a completely different digest message, revealing the attempted modification.

A shared and "immutable" data structure referred to as a blockchain is known, defined as a digital register the items of which are grouped together in "block" connected in chronological order, and the integrity of which is ensured using cryptography. Its contents, once written by a standardized process, can no longer be modified or deleted, without invalidating the entire process. Therefore, by virtue of the blockchain it was possible to make a digital resource univocal.

The blockchain is part of the larger family of Distributed Ledger Technologies or DLTs, i.e., systems based on a distributed ledger that can be read and modified by various nodes of a network. To validate the modifications to be made to the ledger, in the absence of a central body, the nodes must achieve consent. The methods for achieving consent and the structure of the ledger are some of the features that characterize the different DLTs.

A token on a blockchain consists of a digital information item recorded on a distributed ledger, univocally associated with only one single specific user of the system and representative of any form of right: the ownership of an asset (e.g., access to a service, receipt of a payment). Different types of tokens are known according to their legal status: (a) Utility tokens provide exclusive access to features of a digital service within a decentralized network (e.g., Ether and Stellar). (b) Security tokens represent the ownership of an asset and give the owners similar rights to those of shares (e.g., voting rights, dividends, profit shares). In terms of economic function, such tokens are security assets, stocks (equities), debts (bonds) and liabilities. They grant all or some of the declared rights. Security tokens gain their value from the underlying asset, however a different key is that cryptographic tokens represent programmable property, giving assets more features, more liquidity and easier market access, creation speed, fewer intermediaries, lower issue costs, transparency and integrated automation of the security-related processes. (c) Payment tokens: they are synonyms of cryptocurrency and do not have any further functions or connections to other development projects (e.g., Bitcoin, Monero, Tether). These types of tokens are those indicated in a report on Initial Coin Offerings and Crypto-Assets, drawn up by the European Securities and Markets Authority (ESMA), just like the Guidelines published by the FINMA, the federal financial-markets regulator in Switzerland, among the first nations in the world to establish a related regulatory structure.

Many of the cryptographic tokens in circulation are hybrid and can have characteristics included in the different categories, in the sense that they have utility characteristics and provide some property rights, especially of an economic nature.

Smart contracts on blockchain platforms known as non-fungible tokens or NFTs are known. A non-fungible token is a special type of cryptographic token which represents something unique. Unlike cryptocurrencies, NFTs are not mutually interchangeable: they can be exchanged with the same quantity of the same type, precisely because they are unique, possibly rare (scarce) and because each one has different features and characteristics. An example, in the real world, can be an object which cannot be replaced with another similar one, such as a work of art. If someone borrows this work, he/she must return the exact same work. One of the main differences between fungible tokens (e.g., cryptocurrencies) and non-fungible ones is that the former can be divided into fractions, whereas the latter are definitively indivisible.

NFTs are used to create verifiable digital scarcity, digital property and/or possibility of interoperability of the resources on various platforms. NFTs thus represent an evolution of the physical property of a certain asset. They are unique digital assets allowing their users to be their real owners. They can be exchanged in suitable marketplaces thus creating a tokenization process from reality to digital.

Therefore, an NFT is a digital content that represents objects of the real world like works of art, music, games and collections of any type. Anyone purchasing an NFT is not purchasing the work itself, but the possibility to demonstrate a right over a work, guaranteed by a smart contract.

Everything starts with a digital version of the work of art. Typically a digital photo is used or filmed documentation thereof saved in digital format (i.e., in the form of a long binary sequence) from which its hash is calculated, by the non-invertible hashing process previously described. Typically, the next step is the creation of a file containing metadata, including the hash of the work of art and an associated timestamp, and the saving of said metadata and the digital version of the work in a distributed file system, such as the InterPlanetary File System or IPFS, a protocol and a peer-to-peer network for decentralized data storage and sharing. The NFT keeps track of the sales of the hash, so that it is possible to trace the changes of hands of the hash, up to its creator, thereby demonstrating its possession. This mechanism thus provides proof of authenticity and ownership of the work. The owner of the hash, according to the contents of the NFT, can demonstrate his/her rights without the need to contact intermediaries and without time limits. Therefore, NFTs in the artistic field can not only be the optimal solution in terms of "notarization" of the work, but they can contribute to the automation of the management of existing copyrights on the work and their economic exploitation. On the other hand, in terms of authenticity, techniques have not yet been developed that are useful for guaranteeing the identity of the subject who claims to be the author of a work. Whereas in the case of the "paper" authentication it is possible to carry out a graphological investigation on the author's signature, this is not possible with the smart contract.

From an IT point of view, an NFT consists of three elements: (a) the token identifier or ID, a numerical representation associated with the NFT and its owner, which make it distinguishable from the others; (b) the token owner, i.e., the address associated with the owner's wallet; (c) the metadata associated with the token, i.e., a JSON-type data structure containing a description, a link to the digital media (e.g., image in gif or jpeg format), the characteristics (e.g., traits, attributes).

When an NFT is associated with a physical work of art, such as a painting, there is a uniqueness problem in the association between the work and the NFT itself. As mentioned, according to the prior art, the NFT hash can be generated from a digitized version of the work of art (e.g., digitized image of a painting), however this process presents the problem of transforming essentially analog data into its digital equivalent, in which the characteristics of the work (e.g., color, shape) are approximated. It is known that the process of digitizing an image is subject to variations due to the type of light used, the acquisition sensor, its sensitivity and resolution. Further, the work is subject to physical alterations over time, such as chromatic alterations due to oxidative processes, or deterioration of the pigments due to exposure to sunlight. When it is necessary to demonstrate that the physical work actually corresponds to a certain NFT, it will be necessary to perform a new digitization of the work from which to derive a hash which must be identical to that stored in the NFT. Since, as stated according to the prior art, the hashing process produces a completely different hash string even in the presence of a minimal difference in the starting data, it is easy to understand how said process cannot be effectively used to unequivocally guarantee the identity of a work over time.

RFID (Radio Frequency IDentification) systems are known for identifying objects using tags. In an RFID system, readers send an interrogation signal to a nearby tag, which in turn responds via backscattering. The reader analyzes the response and reports the tag data along with the Received Signal Strength Indicator (RSSI) of the signal. The RSSI is a measure of the power received from the signal returned by an RFID tag when interrogated by a reader.

When a reader reports the RSSI value of a tag, it is actually reporting the tag's backscattered response signal power level as it relates to the reader's initial broadcast signal power level. This power level is generally reported in decibel per milliwatt or dBm. Decibels are units of measurement that relate two physical properties on a logarithmic scale. In the case of RFID, the measured property is the change in power, measured with reference to a single milliwatt. To provide an idea of how much this power level varies, a typical fixed RFID reader is capable of outputting a 1 Watt or 30 dBm signal, while the RSSI value of a typical tag can vary from -30 to -85 dBm. This effectively means that only a fraction (about a millionth) of the original power is returned to the reader.

Other measurable parameters when reading a transponder are the reading speed and the response time, i.e., the number of times a tag is read per second and the time taken by the tag to respond for the first time.

Many uses of RFID systems are known. The most widespread are those of univocal product characterization through the reading of information from a unique RFID tag applied to a product with various methods. Even if the methods of application can have anti-tampering aspects, tampering is still possible and the characterization is not adequate to certify products with uniqueness, rarity, high value or complexity, such as works of art.

Patent document US2016009930A1 describes an ink in which RFIDs smaller than 0.75 mm are dispersed, for the unique characterization of a color or a product through the application of the ink in combination with a resin. The characterization takes place through the information contained in the memory of each RFID, for example the same information contained in the product barcode, and in any case always the same information in each tag. This allows multiple products to be read simultaneously, which is not possible with barcodes. This solution has the same degree of characterization reliability as the individual tag.

Patent document US 20180087369 A1 describes the use of RFID to verify the effective degradation of degradable or soluble tools used for example in underground operations such as in temporary isolation areas or flow diversions. The aim is to ensure that the instrument is fully degraded and is no longer blocking or obstructing an underground flow. Micro-RFIDs are dispersed in or over the instrument and therefore the degradation thereof will lead to a signal that decreases over time until it is essentially zero.

This solution does not allow a product to be characterized, but only its effective dissolution to be verified.

Document US2006/180647 A1 describes a method for identifying objects using RFID. Information on the product or the person to be identified can be stored in the RFID. No information on the RFIDs themselves is stored or exploited. This does not make identification secure, for example in the field of art where it is necessary to guarantee the authenticity of a work, because RFIDs are still exposed to tampering.

Document CN103065109 instead deals with the protection of works of art, in particular paintings, but using a calligraphic and micro-texture detection of the surface of the painting, which generates information to be stored in an RFID. A subsequent scan on the surface micro-texture is then compared with the stored one to certify the originality of the work. The heart of the invention therefore lies in the optical detection of the micro-texture of the painting, which requires important and expensive optical apparatus and digital algorithms, and which do not ensure the robustness of the method, for example in case deterioration of the micro-texture of the painting over time.

There remains the need for a unique product characterization through RFID systems or transponders in general, which is resistant to counterfeiting and can thus be used for purposes such as the generation of NFTs or in any case for the identification and/or tracking of high-value objects.

United States Patent Application publication document US 2006/180647 A1 discloses the use of paint containing miniature RFID tags for the storage of generic information on a paintable object, such as a wall.

### Purpose and object of the invention

It is the object of the present invention to provide a method and system for the univocal characterization of a product and the identification of the author which solves the problems and overcomes the drawbacks of the prior art, in whole or in part.

In particular, the invention intends to associate a natively digital uniqueness to a physical work, physically immutable over time, univocally correlated to the identity of the author (understood as an artist or AI or a producer of a handwork, thus a natural person and/or legal person and/or digital agent), easy to detect and not separable from the work itself. Said unit character shall be defined as the digital fingerprint of the work. In particular, said digital fingerprint is such that it can be detected without physical contact with the work, by means of a radio frequency signal. The long digital string that constitutes said digital fingerprint (e.g., the sequence of IDs of the transponders) can then be processed in order to obtain a unique hash to be used within the NFT associated with the work itself.

A method and system according to the appended claims is the subject of the present invention.

### Detailed description of embodiments of the invention

### List of figures

The invention will now be described by way of nonlimiting illustration, with particular reference to the figures of the accompanying drawings, in which:
- figure 1 shows a process of applying a smart paint to a work of art, according to the invention;
- figure 2 shows a process of detecting the RSSI parameter as a function of the relative orientation between detection antenna and RFID with different inclinations, according to an aspect of the invention;
- figure 3 shows a high level flowchart of the univocal identification process according to an embodiment of the invention;
- figure 4 shows a schematic diagram of a first method of localizing the position of the transponders according to an embodiment of the invention;
- figure 5 shows a schematic diagram of a second method of localizing the position of the transponders according to an embodiment of the invention; and
- figure 6 shows a generalization of the method in Fig. 5;
- figure 7 shows a product scanning system according to an aspect of the invention;
- figure 8 shows a flowchart of the scanning process according to an embodiment of the invention; and
- figure 9 shows a flowchart for determining the actual position of a tag after scanning, according to an embodiment of the present invention.

It is specified herein that elements of different embodiments can be combined together to provide further embodiments without restrictions by respecting the technical concept of the invention, as an ordinarily skilled person will effortlessly understand from the description.

Moreover, the present description also refers to the prior art for the implementation thereof, regarding the not described detail features, such as elements of minor importance usually used in the prior art in solutions of the same type, for example.

When an element is introduced, it is always understood that there can be "at least one" or "one or more".

When a list of elements or features is given in this description, it is understood that the finding according to the invention "comprises" or alternatively "consists of" such elements.

When listing features within the same sentence or bulleted list, one or more of the individual features can be included in the invention without connection with the other features in the list.

Two or more of the parts (elements, devices, systems) described above can be freely associated and considered as part kits according to the invention.

### Embodiments

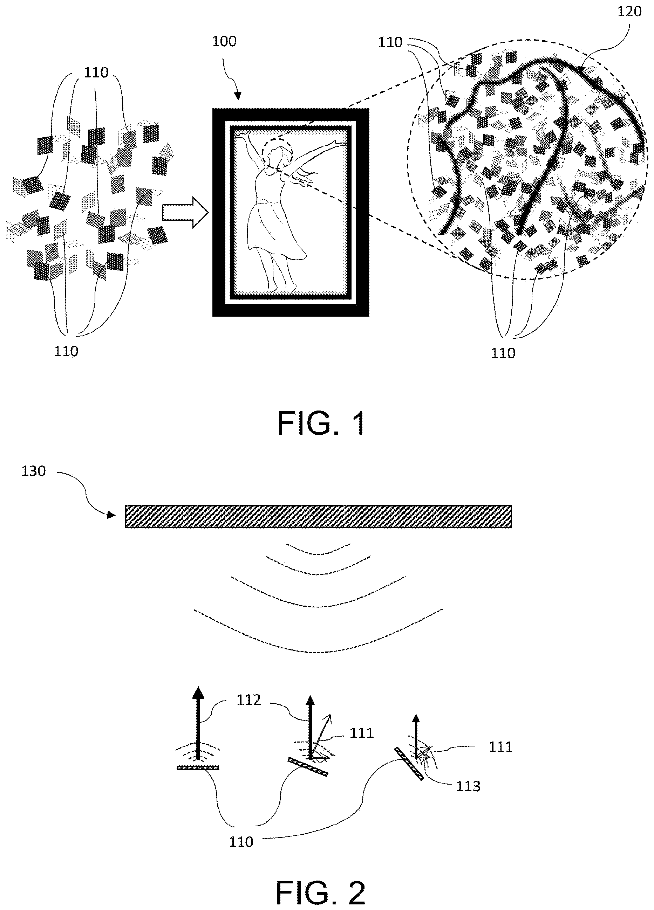

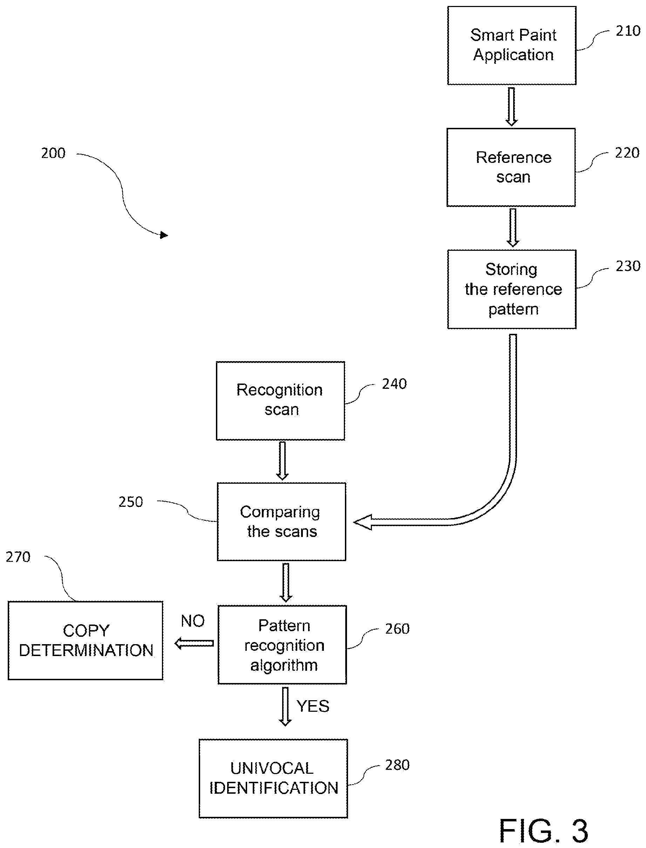

According to an aspect of the invention, and with reference to Fig. 1, a handwork 100 (e.g., a work of art) is univocally identified through the application of a substrate containing a certain number of transponders 110 (e.g., micro-RFID in UHF band) therein, such as an epoxy resin in which said transponders 110 are dispersed. Once the resin has solidified, the micro transponders are dispersed randomly and held in their position inside said substrate (step 210 in the flowchart in Fig. 3).

The substrate can be obtained through the application of a paint (or another spreadable material) containing a dispersion of transponders. Alternatively, the transponders could be dispersed in a material in the liquid state, which by solidifying holds them in fixed positions, e.g., a molten plastic material which solidifies in a mold to form a product (the fixed positions are as such unless the product geometry is changed, e.g., if it is elastic the mutual positions can vary and then return to the initial positions; in any case, the mutual positions (proximity) are maintained and thus we will talk about a "stable" application of the dispersion). The transponders can also be applied randomly to a fabric during the production process. More generally, the substrate can consist of any product that incorporates the dispersion of micro transponders therein, regardless of the production process according to which it was obtained.

In general, the dispersion of transponders can be obtained by randomly mixing a plurality of said transponders 110 with a binding substance, for example consisting of an aqueous phase emulsion (tempera), drying oil, plant-based or synthetic resins including acrylic, epoxy, phenolic, polyester, vinyl ester, thermoplastic, thermosetting resins, elastomers, or colloids so that, after the drying step, the position of said transponders is stable over time.

The dispersion can even be a simple powder without any binding substance, which is used only during application to a product.

In any case, it is possible to apply the dispersion to a label first and then apply this to a product. Everything described herein is also valid in the case of a label.

The product 100 can consists of a support on which a work of art is created. Said support can be provided with a natural or synthetic substrate on which an author can create his/her work, including paper, canvas, fabric, ceramic, wood, glass, metal, stone, masonry, plastic. Said transponders 110 can be applied during the step of producing said support or later during the creation of the work.

In the enlargement to the right in Fig. 1, the distribution of the transponders 110 with respect to the lines of the drawing of the work of art can be observed. The application of the dispersion of micro-transponders is not necessarily to the entire surface of the work of art and can only be to a portion thereof, e.g., to the opposite side of the pigments thereof, or in an inner layer of a work of art (not necessarily a painting). In this case, the term "surface" should be used below in the broader sense of an inner or outer surface connected or not to other parts of the handwork.

The detection system of the dispersion of micro-transponders 110 consists of at least one antenna (RFID) 130 and a data processing unit (not shown) which can be connected in turn to a server for the storage or processing of the information detected.

According to an aspect of the invention, the detection system can include one or more RF amplification systems and/or RF resonators, one or more television cameras, one or more detection systems of the position of the antenna (not shown).

The detection system (and thus the antenna 130) is moved towards the work of art 100 in any position, e.g., resting on a surface thereof (step 220 in the flowchart in Fig. 3). A plurality of micro-RFID transponders present in the substrate of the work (a subset of transponders present) falls within the reading range of said identification system. The transponders are preferably provided with an anti-collision protocol so that all the visible transponders (i.e., visible to the antenna as a function of the power of the backscattered signal) can be read by the same antenna.

The detection system reads one or more of the following items of characterization information for each transponder: EPC (Electronic Product Code), TID (Tag Identification) memory, user memory, received signal strength indication (RSSI), reading speed, response time, position, distance from neighboring transponders. Proximity is used to mean the mutual position or the topological position of the transponders, as illustrated below.

The minimum set of preferred information is the tag ID and its position. Optionally, it is advantageous to include the RSSI and possibly the detected RGB color of the object in the scanned point or region. The other parameters are useful and advantageous, but to a lesser extent. For example, the EPC memory is used for writing information in the tags when there is not enough user memory. The distance from neighboring transponders can be calculated according to the position. The response speed and/or reading time can be useful for verifying the correct reading of the RFIDs.

The reading can be implemented for the entire surface where the dispersion of transponders is located, or on a portion thereof, whether it is completely connected or made up (also) of distant parts.

Such information is processed in the local data processing unit (not shown) or sent to a server (not shown). A pattern consisting of or based on said information is stored as a reference pattern or characterization pattern or identification pattern of the handwork 100 (step 230 in the flowchart in Fig. 3). This pattern univocally characterizes how said transponder is detected by the antenna as a function of their mutual position. In fact, such a mutual position can vary, as shown in Fig. 2, according to the mutual inclination between the antenna 130 and transponder 110. In fact, the component 112 of the signal in the direction of the antenna 130 will thus be maximum when the two antennas (of the reader and of the transponder) are parallel and will be minimum in the case of perpendicular antennas. The component 111 perpendicular to the antenna will reduce in relation to the mutual indication of the antennas.

The transponders 110 being stuck in a fixed and unalterable (or "stable") position over time - see above - within the handwork 100 implies that their mutual position cannot change over time. Therefore, an antenna placed at different times in the same point (and with the same inclination and distance from the handwork) will detect the same group of transponders with substantially the same detected information. This can thus be considered a true univocal digital fingerprint of the handwork (hereinafter also "univocal identification pattern" or "characterization pattern").

According to a preferred embodiment of the invention, for each transponder, at least the data contained in one or more of the following transponder memory areas are recorded: EPC (Electronic Product Code) memory, TID (Tag Identification) memory, user memory, for a better characterization of the product.

This result can be achieved by systems of positioning the antenna in the same position, or by carrying out the reference scan acquiring various patterns as the inclination and/or distance of the antenna varies in each detection position, the characterization pattern being the union of the information acquired for each predetermined scan position and for each inclination.

However, acquisition with different inclinations or with a fixed inclination is not an essential feature of the invention, since the pattern recognition can be performed within a certain margin of error and since the proximity of the transponders can also be detected, which is substantially independent of the inclinations, as illustrated below.

In general the ID can be detected and the hash of the pattern of IDs of the transponders can be calculated and then stored in a blockchain. The RFID pattern of information acquired in the characterization step can be encrypted, using for example said hash as an encryption key and storing it, making the system more robust against fraud attempts.

The information detected through the RFID fingerprint can be further related to the information detectable in each predetermined scanning position (or by acquiring an overall image and extracting the corresponding portions) using a camera on the surface of the handwork, the camera being able to be part of the reading system. This provides an RFID/RGB fingerprint (RFID and possibly also RGB). The information detected through the RFID fingerprint can be further related to the information detectable through a 3D sensor (RGBD image, color + depth) or by a sensor sensitive to other parts of the electromagnetic spectrum (e.g., thermographic camera).

The RFID/RGB fingerprint shall constitute the electronic or univocal DNA or the univocal digital fingerprint of the handwork 100. Said electronic DNA can be codified in an RFID or a matrix code which will constitute the certificate of authenticity of the work. It can also be recorded in a blockchain such as an NFT so that said electronic identity cannot be counterfeited. In particular, a hash code of the RFID/RGB fingerprint can be stored in the blockchain.

According to an aspect of the invention, the univocal digital fingerprint information can be stored in a memory unit (not shown).

According to an aspect of the invention, the digital fingerprint information can be compressed, encrypted and stored in the user memory of each of the transponders 110. Optionally, a digitized biometric sample proving the identity of the author of the product 100 can be stored in said memory unit and/or in the blockchain and/or in the user memory of the transponders. This digitized biometric sample proving the identity of the author of the product 100 can conveniently consist of at least one part of the digitized genetic code of said author of said product, a compressed and encrypted version thereof or the hash code of said at least one part of the genetic code.

With reference to Fig. 3, once the univocal reference pattern has been obtained in 230, the originality of the handwork 100 can be verified by performing first a recognition scan 240. In this recognition scan the reading system can cover the entire work or only a part of it. In this case, it is positioned in one or more positions with respect to the handwork 100. A reading is not required at every location where the reference scan is taken, so checking for originality will be simpler and quicker than the characterization scan.

The measurement of the same parameters/information as the reference scan (even possibly for different inclinations and/or distances) will provide a shorter recognition pattern which will correspond to a section of the electronic DNA of the work. By repeating the measurement several times in different predetermined scanning positions, several segments of the electronic DNA can be compared, further increasing the probability of correct identification.

The comparison in the block 250 can be performed using suitable pattern search algorithms in 260, also with reference to a predetermined deviation margin definable in many known ways. When the reference scan has been performed for various inclinations of the antenna 130, the comparison will be made for all the inclinations of the reference scan. In the case of identification of the pattern of the recognition scan within the univocal pattern of the reference scan (even within a predetermined error), there will be a unique identification of the handwork 100 in 280, otherwise it will be determined that it is a copy in block 270 (generating corresponding digital information).

According to an aspect of the invention, at least one part of the characterization information obtained in the first scanning step is read from the user memory of the transponders 110 and compared with at least one part of the verification information obtained in the subsequent scan performed for verification purposes.

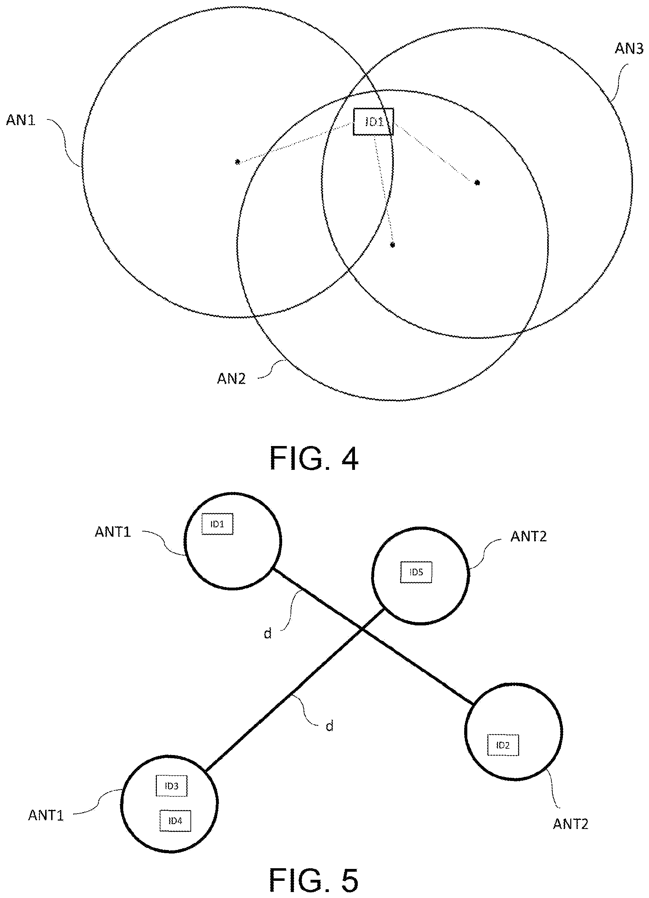

Figure 4 illustrates a transponder position localization method, according to an aspect of the invention. Let us consider a detection system consisting of a plurality of antennas AN1, AN2, AN3 (as an example, the antennas being able to be more), the mutual position of which is known with accuracy. When said system is moved towards the substrate which integrates a plurality of transponders in a random position (such as that drawn and indicated by ID1), the detection, for example of ID, RSSI, reading speed and number of readings of each tag from all said antennas allows its position to be calculated using techniques of the prior art, such as for example microzoning, triangulation, trilateration (using RSSI). In particular, in trilateration for each reading point the measurement or approximation of the corresponding distance creates a circular area of possible positions for the tag. A basic approach to trilateration is to calculate the intersection of the circles to estimate the position of the tag. Once the position of a subset of the tags with respect to each antenna of the reading system is known, the processing unit is able to calculate the mutual position of each of said tags with respect to the others according to known techniques of Euclidean geometry. This process is known as "scene analysis" for locating tags with respect to a known set of antennas.

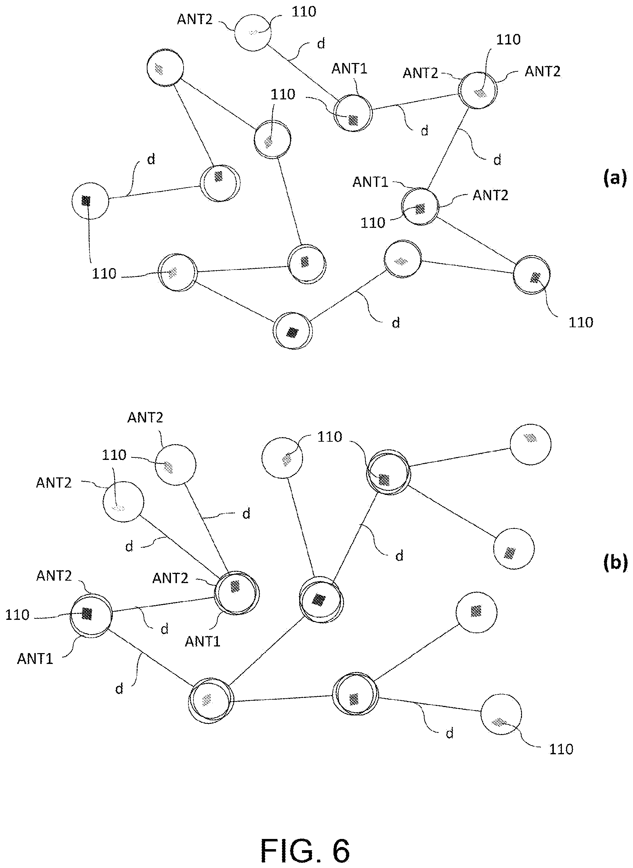

The mutual position can be understood alone or in combination in said characterization and recognition patterns with the advantage of greater robustness of the method against replicas. In fact, the ID alone can be obtained from a scan similar to that in the characterization step. The mutual position has the advantage of being applicable to surfaces the geometry of which can vary, such as elastic surfaces. With reference to the attached Fig. 5, let us now consider a simplification of the previous reading system in which there is a pair of antennas ANT1-ANT2 at a fixed distance d which detect the tags ID1 and ID2 and then determine their mutual distance in the area approximation of each antenna, and the same pair of antennas can be rotated to detect the tags ID3, ID4 on one side and ID5 on the other in the same way. Small antennas can thus be used to characterize the mutual position of the tags. The concept is extended in Fig. 6 where in (a) detection is performed with positioning of the double antenna still only detecting two neighbors of a tag and in (b) detecting three neighbors. By mapping the mutual distances in the characterization phase, the verification can be carried out by moving the pair of antennas randomly.

Both the scene analysis process by trilateration and the localization process by proximity make it possible to detect the mutual distances between at least one subset of the transponders present in the substrate. Said mutual distances are invariant with respect to the position and inclination of the reading system, as they represent an immutable physical property of the substrate. The mutual distances can be included in the characterization and recognition patterns, with the advantage of greater robustness of the method.

In the detection step of the reference scan, said physical properties of the RFID substrate or of a part thereof are measured. In the verification step (recognition scan) any subset of the substrate is scanned and said physical properties are derived therefrom, then compared with the reference ones relating to the same subset of transponders.

Considering the random distribution of the transponders on the substrate of the work, the situation in which a set of transponders is particularly close or partially overlapping must be considered. Said nearby transponders form a cluster which can fully or partially fall within the reading field of an antenna. Said cluster can be assimilated by approximation to a single identification element, such as to be easier to identify and locate by an antenna. In this case, having different IDs for the same position, it will be possible to establish selection criteria in the product characterization step and "tolerance" criteria between the detected pattern and that (a portion) detected in the characterization step. This distance criterion can be established mathematically or by calibrating the system according to the invention.

According to a further embodiment of the invention, the RFIDs 110 are provided with a writable user memory, preferably of the Write Once Ready Many type, and where after the characterization step and before the recognition step, the pattern or a subset of the characterization pattern obtained based on local parameters of the RFIDs is stored in said user memory of said transponders, and where:
- in the recognition step the pattern stored in the RFIDs is read; and
- in the comparison step, the pattern stored in the characterization pattern is searched for.

A system for univocal product characterization according to the invention can comprise:
- a liquid dispersion of transponders, e.g., micro-RFID UHF 110, applicable to a surface of a product 100;
- at least one RFID antenna 130;
- at least one processing unit;
where said processing unit is configured to receive and store a characterization pattern of said product 100 as defined above, and to receive and verify the presence of a recognition pattern with identical type of information within said univocal reference pattern.

According to an aspect of the invention, a camera is comprised configured to obtain an image of said surface at a set of scanning positions on said surface of said product.

According to a different aspect of the invention, said processing unit is configured to store a hash of said characterization pattern as an NFT in a blockchain.

According to a different aspect of the invention, one or more systems for detecting the position of the antenna 130 are present.

### Scanning and recognition of uniqueness method

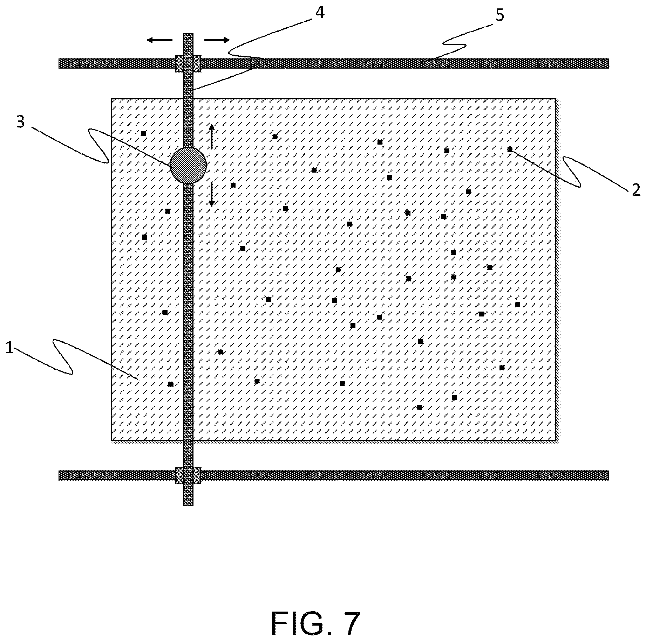

With reference to Fig. 7, the scanning system aims to map the position of all the RFID tags dispersed within an object, e.g., a painting, and simultaneously to map the color and three-dimensional surface information of the object. Considering that the reading area of the RFID antenna is larger than the advancement step in x and y, each tag will be ready in various successive steps both in x and in y, around its actual position. A specific algorithm, at the end of the entire scanning process, allows the actual position of all the tags to be obtained, averaging the positions (x,y,z) in which each tag has been detected.

For each detected tag, the ID, actual position (xyz, average of the positions), RSSI (average of all the measured values) and RGB image detected around the actual position of the tag are stored. Suppose that N tags are detected in total. An algorithm considers all the possible ways of dividing the set of N tags into subgroups consisting of M elements (where obviously M < N), calculates the average of the distances of the M tags present in each subgroup, sorts the groups by decreasing average distances, chooses the subgroups with the greatest average of the distances and such that each of the N tags appears in M subgroups.

Finally, the scanning system repeats the scanning process all over again, storing the codes of the M-1 tags of the group to which it belongs in encrypted form.

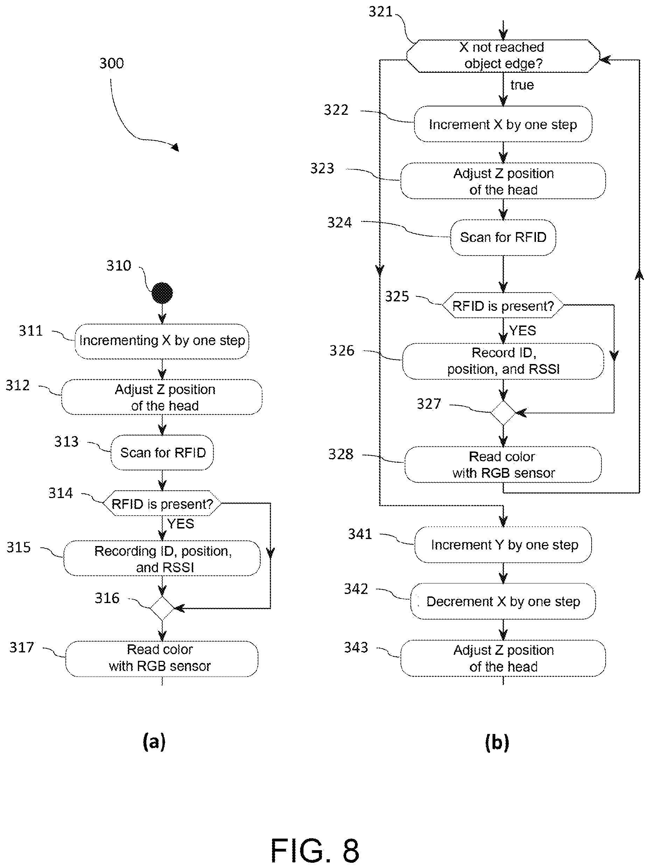

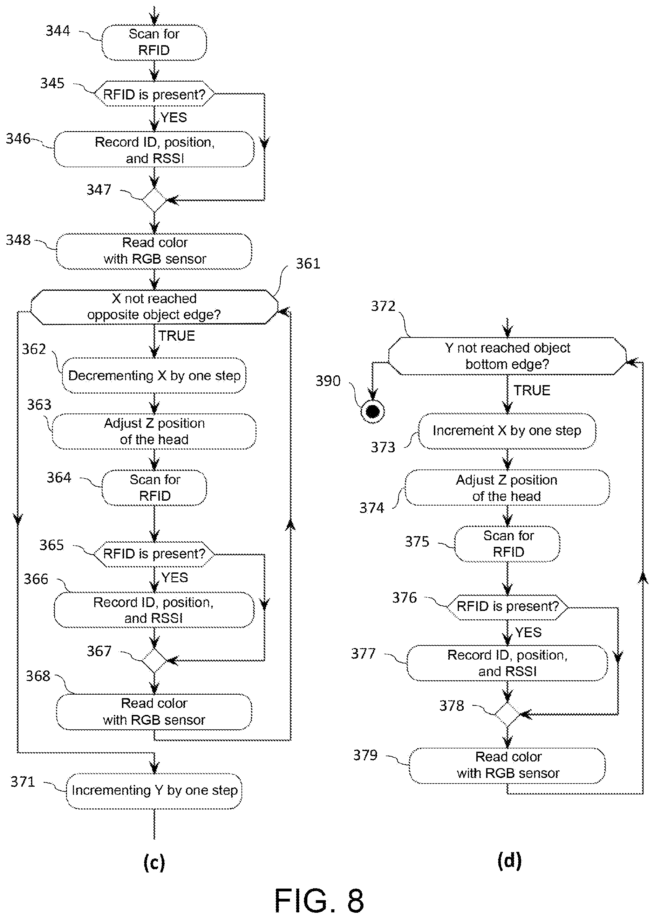

The flow of the scanning process 300 with such a device can be as in Fig. 8, in which a single flowchart is subdivided into successive portions (a)-(d).

At the start 310, the position X (and/or Y) of one step is incremented in 311. The position Z of the reading head in 312 is also (optionally) adjusted in order to maintain a fixed distance from the surface, and thus make the reading more reliable.

Then the scan per RFID takes place in 313. At this point, if there is an RFID present, the ID is recorded, the position and optionally the RSSI in 315. If, instead, there is no RFID, the process moves onto block 317 (which is reached in any case from 315) for, optionally, reading the color of the scanned object (e.g., a painting) with an RGB sensor.

Then the position control takes place. In particular, it is verified in 321 whether X has reached the edge of the object. If this is not true, the process moves onto the increment of Y in block 341, otherwise X is incremented by one step in 322 and then the portion Z can optionally be adjusted again as above. At this point a scanning per RFID takes place in 325. If present, the ID, position and optionally RSSI are recorded in 326, if it is not present at the connection block 327 at which block 326 is also released. Straight after the color is optionally read with an RGB sensor as above.

Thus block 341 is reached, where Y is incremented by one step and X is decremented by one step in 342, the position Z is adjusted as above in 343 and scanning per RFID is carried out in 344 as above. If there is an RFID in 345, then the ID and position are recorded in 346 and optionally RSSI, otherwise the process moves onto the connection block 347 and then 348 for the optional detection and storage of the color as above.

At this point in 361 it is verified whether X has reached the opposite edge of the object, in which case X is decremented by a step in 362, Z is adjusted as above in 363 and a scanning per RFID takes place in 364. If an RFID is present, the ID and position are read and optionally RSSI and then at the connection block 367 to which the process leads even if X has not reached the opposite edge, to optionally detect the color as above in 368.

Straight after, Y is increased by one step in 371 and it is verified in 372 whether Y has reached the bottom edge. If this is not true, the process ends at 390. If instead Y has not reached the bottom edge, X is incremented in 373 by one step, the position Z is optionally adjusted in 374 and a scanning per RFID takes place in 375. In the subsequent block 376, it is verified whether an RFID is present. If this is true, the ID and position are recorded and optionally RSSI to then move onto the connection block 378 to which the process leads even if there is no RFID present. At this point the process moves onto 379 where the color is optionally detected as above and it starts again from block 372 until Y has reached the bottom edge.

This process is valid for every 1D, 2D or 3D object with the appropriate adjustment of the axes and scanning steps.

The suggested scanning system aims to detect and precisely map the position of RFID tags embedded into a 3D object. Such an object could, for example, be a painting or a piece of composite material. As well as the localization of the RFID tags, the system also records color information and maps the 3D surface of the object.

The scanning system is based on a series of cyclic steps: increment/decrement of the position along the X axis, adjustment of the position along the Z axis to maintain a constant distance from the surface of the object, detection of the presence of RFID tags and reading of the color with an RGB sensor.

The scanning system moves along the X axis, scanning the surface of the object. When it meets an edge of the object, it increments the position along the Y axis and proceeds in the opposite direction along the X axis. This process continues until the lower edge of the object is reached along the Y axis.

During every step, the position along the Z axis is adjusted in order to maintain a constant distance from the surface of the object. This ensures that the RFID and RGB readings are constant and reliable, despite possible irregularities of the surface of the object.

Every RFID tag detected is recorded with its position (X, Y, Z), the ID and the RSSI (Received Signal Strength Indicator) value, which indicates the power of the signal received from the tag. As the reading area of the RFID antenna is larger than the advancement step in X and Y, every tag will be detected for various successive steps both in X and in Y, around its actual position.

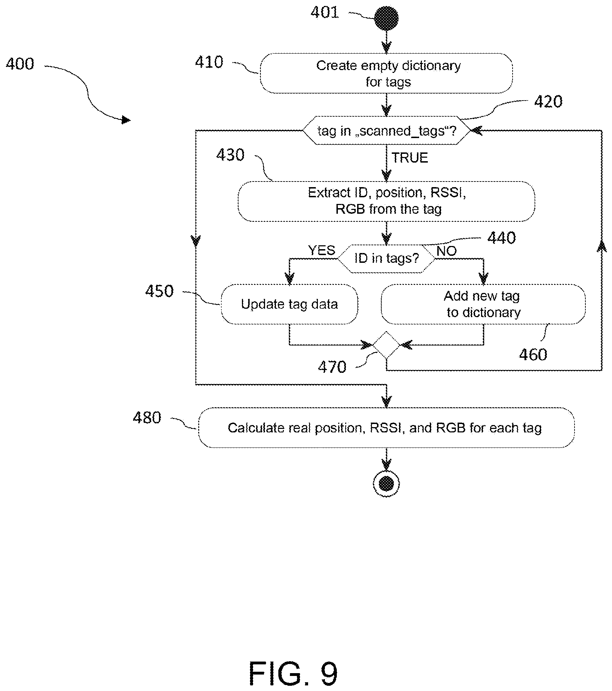

With reference to Fig. 9, to determine the actual position of every tag, it is advantageous to store all the positions detected for each tag in a dictionary, with the ID of the tag as the key. At the end of the scan, the algorithm can calculate the average of the detected positions for each ID, thus obtaining the actual position of the corresponding tag. This process reduces the error due to the overlapping of the RFID antenna reading area with respect to the advancement step.

In addition to the position, the algorithm can also calculate the average of the RSSI and the RGB image detected around the actual position of the tag. These data are useful for later analysis, such as identifying patterns in RFID data or analyzing object colors.

In the specific flowchart 400, the process begins in 401, and an empty dictionary for tags is created in 410. Then the scanning takes place as above. If in the scan in 420 an RFID tag is detected, the ID and position are extracted, and optionally RSSI and/or RGB. If in 440 the identifier ID is already in the dictionary, the parameters as above are updated in the dictionary in 450, whereas in the opposite case it is added to the dictionary in 460, and the process moves onto the connection block 470 in any case, from which the scanning of another tag starts again in 420. If, instead, no more tags are scanned in 420, the actual position, RSSI, and RGB calculation takes place for each scanned tag (using a reader as above).

The actual position/RSSI/RGB is calculated as an average (any type of average) for each tag.

In practice, the location and other data per tag are updated with each scan and averaged to determine them for the purpose of calculating distances between tags. To calculate these mutual distances, all groups of at least 2 tags are analyzed and the average distance between the tags in each group is calculated based on the already calculated average position (as above or with an equivalent algorithm).

In practice, the algorithm takes into consideration all the possible ways of dividing the set of detected tags into subgroups consisting of M elements (M greater than or equal to 2). For every possible subgroup, it calculates the average of the distances between the tags in the group. Then, it sorts the groups by average of decreasing distances.

At this point, the algorithm selects (and stores in a specific dictionary) the subgroups with the average of the greatest distances, ensuring that each of the tags detected appears in at least M subgroups. This step is useful for identifying groups of tags that are relatively close to one another.

Finally, the scanning system repeats the scanning process, but with one addition: during each step, it stores the IDs of the M-1 other tags in its group in an encrypted manner. This is used to create a map of the tag groups directly on the tags themselves, making it possible to identify the groups even without the grouping algorithm.

The solution described above provides an advanced object identification and anti-counterfeiting protection method based on the application of a random distribution of RFID tags inside an object. A technical effect of this solution is the increase in the redundancy and security of the identification system, thus overcoming the Single Point Of Failure (SPOF) problem. In fact, in an identification system according to the prior art, the presence of a single tag represents a potential SPOF. If the tag is damaged, removed, or somehow compromised, the entire identification system can fail and all related information is lost. However, with the application of a random distribution of redundant RFID tags according to the suggested method, the probability of such a failure is strongly reduced.

A further technical effect of this solution is the increase in anti-counterfeiting security with respect to the prior art. The complexity resulting from the random distribution of the RFID tags within the object makes it extremely difficult to replicate or counterfeit the object. A potential counterfeiter should not only be able to replicate the item itself, but also replicate every single tag and place all the tags in the same way as they are randomly distributed within the original object. This would involve a level of complexity and accuracy beyond the capabilities of many counterfeiting methods.

Furthermore, the suggested system uses a specific algorithm to map the position of each tag and to group the tags based on their topology. This allows creating a unique "digital fingerprint" for each object, based not only on the ID of the individual tags but also on their distribution within the object and possibly also considering other information such as RSSI and color data. This digital fingerprint is further protected by cryptography, making counterfeiting even more difficult.

Finally, the scanning system stores the encrypted IDs of other tags in the group on each tag, thus creating a map of the groups of tags directly on the tags themselves. This feature adds a further level of security and redundancy, as it makes it possible to identify groups of tags even in the absence of the grouping algorithm.

In conclusion, the technical effect of this solution is a significant increase in the redundancy and security of object identification systems, overcoming the SPOF problem and providing powerful anti-counterfeiting protection.

It is specified here that the dispersion or powder of RFID tags does not necessarily have to be used as a paint, but can be applied to a label in various manners, which is then applied with anti-tampering application to an object.

### Advantages of the invention

Among the advantages of the method and of the system according to the invention the following can be listed, which can be considered separately or in combination:
- univocal recognition of a handwork;
- non-reproducibility of the unique pattern of the handwork;
- inalterability over time;
- impossibility to separate the RFID univocal pattern from the handwork;
- univocal and secure connection between author and work;
- identification speed;
- inviolability of the fingerprint (e.g., when included in a blockchain);
- low implementation cost; and
- non-invasiveness of the handwork.

In the above disclosure, preferred embodiments were described and some variants of the present invention were suggested, but it is understood that those skilled in the art may make modifications and changes without departing from the related scope of protection, as defined by the appended claims.

## Claims

1. A method for verifying the authenticity of a product and optionally the identity of an author, including the following steps:
A. applying (210) to at least one surface of a product (100) a dispersion of transponders (110) or applying a label to the surface to which the dispersion of transponders (110) was previously applied;
B. characterizing (220) said surface of said product or label by moving at least one antenna (130) towards at least one portion of said product surface or label for scanning at least one subset of said transponders (110) acquiring a characterization information which include for each transponder (110) at least the transponder ID and the transponder position with respect to a predefined reference system;
C. storing (230) in a memory unit said characterization information acquired in step B, as a characterization information pattern of the product;
D. acquiring (240), by scanning at least one area of said at least one portion of said surface of product or label, wherein at least part of the dispersion of transponders (110) applied in step A is present, moving said at least one antenna (130) towards the surface of said product (100), the characterization information of step B, thus obtaining verification information;
E. storing (250) said verification information acquired in step D, relating to said product, in a authenticity verification pattern of the product;
F. searching (260) said authenticity verification pattern in said characterization information pattern, within a predefined deviation margin; and
G. generating (280) digital information on the identity and authenticity of the product (100) and optionally on the identity of the author, as a function of a positive or negative outcome of step F.

2. A method according to claim 1, wherein said characterization information further comprises a received signal intensity indication (RSSI).

3. A method according to claim 1 or 2, wherein said characterization information comprises one or more of: an EPC (Electronic Product Code) memory, a TID (Tag Identification) memory, a user memory, a reading speed, a response time.

4. A method according to one or more of claims 1 to 3, wherein in step C and step E the characterization information pattern and the authenticity verification pattern of the product comprise for each transponder a distance indication of each transponder (110) from the other transponders, and the following steps are performed:
- dividing the set of transponders into all the subgroups consisting of M elements, with M greater than or equal to 2 and less than the total number of transponders on the surface of the product or the label;
- for every subgroup, calculating the average of the distances between the transponders in the subgroup;
- choosing the subgroups with a highest average distance above a predefined threshold, making sure that each of the detected transponders appears in at least M subgroups;
- storing the averages of the distances for each of the subgroups chosen in the previous step in said characterization information pattern in step C and in said authenticity verification pattern in step E.

5. A method according to one of claims 1 to 4, wherein said transponder position is calculated as an average of transponder positions detected in every antenna position for each transponder ID.

6. A method according to one of claims 1 to 5, wherein in step A the product (100) consists of a support on which a work of art is made.

7. A method according to one of claims 1 to 6, wherein in step A the dispersion of transponders is obtained by randomly mixing a plurality of the transponders (110) with a binding substance so that, following a drying step, the transponder position of said transponders is stable over time.

8. A method according to one of claims 1 to 7, wherein in steps B and D the RGBD information of color and depth of said product (100), as acquired when scanning by means of a camera for each scanned position of the product, is added to the characterization information and the verification information.

9. A method according to one of claims 1 to 8, wherein in step C the storing is carried out in a blockchain, by hashing at least one part of the characterization information obtained in step B, and then minting a non-fungible token (NFT) such as to contain in its metadata said hash and the reference to a storage location of said characterization information, preferably on a distributed file system (DFS) such as the InterPlanetary File System (IPFS).

10. A method according to one of claims 1 to 9, wherein in step C at least one part of the characterization information acquired in step B is compressed, encrypted and stored in a user memory of each of the transponders (110).

11. A method according to one of claims 1 to 10, wherein in step C a digitized biometric sample proving the identity of the author of the product (100) is stored, and is optionally stored in the blockchain according to claim 9 and/or in the user memory according to claim 10.

12. A method according to claim 11, wherein said digitized biometric sample proving the identity of the author of the product (100) comprises one of: at least one part of the digitized genetic code of said author of said product, a compressed and encrypted version thereof, the hash code of said at least one part of the digitized genetic code.

13. A method according to one of claims 1 to 12, wherein in steps B and D a plurality of antennas (AN1,AN2,AN3; ANT1,ANT2) is used, which have known mutual positions during the performing of the two steps, and wherein the mutual position of the transponders (110) is obtained by proximity to the antenna or trilateration based on the RSSI, the mutual positions being included in said characterization information and the verification information.

14. A method according to one of claims 1 to 13, wherein in step G at least one part of the characterization information obtained in step B is read from the user memory of the transponders (110) according to claim 10 and compared with at least one part of the verification information obtained in step D.

15. A system for univocal product characterization, comprising:
- a dispersion of transponders (110) applicable to a surface of a product (100) or a label applicable to the product;
- at least one RFID antenna (130);
- at least one processing unit;
**characterized in that** said processing unit is configured to receive and store said characterization information, acquired in step B, of said product (100) according to the method of one or more of claims 1 to 14, as well as to receive and verify the presence of the verification information, obtained in step D, with the same type of information within said characterization information.

16. A system according to claim 15, wherein a camera is included, which is configured to obtain an image of said product at a set of scanning positions on the surface of said product (100).

17. A system according to claim 15 or 16, wherein said processing unit is configured to calculate and store a hash of said at least one part of characterization information and to mint an NFT in a blockchain, such that it contains, within its metadata, said hash and a reference of a storage position of said characterization information, preferably on a distributed file system (DFS) such as the InterPlanetary File System (IPFS).

18. A system according to one or more of claims 15 to 17, wherein one or more systems for detecting the position of the antenna (130) are provided.

## Patentansprüche

1. Verfahren zum Überprüfen der Echtheit eines Produkts und optional der Identität eines Autors, umfassend die folgenden Schritte:
A. Anbringen (210) einer Dispersion von Transpondern (110) auf mindestens eine Oberfläche eines Produkts (100) oder Anbringen eines Etiketts auf die Oberfläche, auf die zuvor die Dispersion von Transpondern (110) angebracht wurde;
B. Kennzeichnen (220) der Oberfläche des Produkts oder Etiketts durch Bewegen von mindestens einer Antenne (130) zu mindestens einem Abschnitt der Produktoberfläche oder des Etiketts zum Abtasten mindestens einer Teilgruppe der Transponder (110), indem eine Kennzeichnungsinformation erfasst wird, die für jeden Transponder (110) mindestens die Transponder-ID und die Transponderposition in Bezug auf ein vordefiniertes Bezugssystem umfasst;
C. Speichern (230) in einer Speichereinheit der Kennzeichnungsinformation, die in Schritt B erfasst wird, als ein Kennzeichnungsinformationsmuster des Produkts;
D. Erfassen (240) der Kennzeichnungsinformationen aus Schritt B durch Abtasten von mindestens einem Bereich von mindestens einem Abschnitt der Oberfläche des Produkts oder Etiketts, wobei mindestens ein Teil der Dispersion von Transpondern (110), die in Schritt A angebracht wird, vorhanden ist, indem mindestens eine Antenne (130) zu der Oberfläche des Produkts (100) bewegt wird, wodurch Überprüfungsinformationen erhalten werden;
E. Speichern (250) der Überprüfungsinformationen, die in Schritt D erfasst wurden, die sich auf das Produkt beziehen, in einem Echtheitsüberprüfungsmuster des Produkts;
F. Suchen (260) des Echtheitsüberprüfungsmusters in dem Kennzeichnungsinformationsmusters innerhalb einer vordefinierten Abweichungsgrenze; und
G. Erzeugen (280) digitaler Informationen über die Identität und Echtheit des Produkts (100) und optional über die Identität des Autors in Abhängigkeit von dem positiven oder negativen Ergebnis aus Schritt F.

2. Verfahren nach Anspruch 1, wobei die Kennzeichnungsinformation ferner eine Empfangssignalstärkeangabe (RSSI) umfasst.

3. Verfahren nach Anspruch 1 oder 2, wobei die Kennzeichnungsinformation eines oder mehrere der folgenden Elemente umfasst: einen EPC-Speicher (Elektronischer Produktcode), einen TID-Speicher (Tagidentifizierung), einen Benutzerspeicher, eine Lesegeschwindigkeit, eine Reaktionszeit.

4. Verfahren nach einem oder mehreren der Ansprüche 1 bis 3, wobei in Schritt C und Schritt E das Kennzeichnungsinformationsmuster und das Echtheitsüberprüfungsmuster des Produkts für jeden Transponder eine Distanzangabe jedes Transponders (110) zu den anderen Transpondern umfassen und die folgenden Schritte durchgeführt werden:
- Aufteilen der Gruppe von Transpondern in alle Teilgruppen bestehend aus M Elementen, wobei M größer oder gleich 2 ist und kleiner als die Gesamtzahl der Transponder auf der Oberfläche des Produkts oder des Etiketts ist;
- für jede Teilgruppe, Berechnen den Mittelwert der Abstände zwischen den Transpondern in der Teilgruppe;
- Auswahlen der Teilgruppen mit dem höchsten Mittelabstand über einem vordefinierten Schwellenwert, indem sichergestellt wird, dass jeder erkannte Transponder in mindestens M Teilgruppen erscheint;
- Speichern der Mittelwerte der Abstände für jede der Teilgruppen, die in dem vorherigen Schritt ausgewählt werden, in dem Kennzeichnungsinformationsmuster in Schritt C und in dem Echtheitsüberprüfungsmuster in Schritt E.

5. Verfahren nach einem der Ansprüche 1 bis 4, wobei die Transponderposition als ein Mittelwert der Transponderpositionen berechnet wird, die bei jeder Antennenposition für jede Transponder-ID erkannt wird.

6. Verfahren nach einem der Ansprüche 1 bis 5, wobei in Schritt A das Produkt (100) aus einem Träger besteht, auf dem ein Kunstwerk hergestellt wird.

7. Verfahren nach einem der Ansprüche 1 bis 6, wobei in Schritt A die Dispersion der Transponder durch zufälliges Mischen einer Mehrzahl von Transpondern (110) mit einer Bindesubstanz erhalten wird, so dass, nach einem Trocknungsschritt, die Transponderposition der Transponder über die Zeit stabil bleibt.

8. Verfahren nach einem der Ansprüche 1 bis 7, wobei in den Schritten B und D RGBD-Informationen von Farbe und Tiefe des Produkts (100), wie sie beim Abtasten mittels einer Kamera für jede abgetastete Position des Produkts erfasst werden, zu der Kennzeichnungsinformation und der Überprüfungsinformation hinzugefügt werden.

9. Verfahren nach einem der Ansprüche 1 bis 8, wobei in Schritt C das Speichern in einer Blockkette durchgeführt wird, indem mindestens ein Teil der Kennzeichnungsinformation, die in Schritt B erhalten wird, dem Hashing unterzogen wird und anschließend ein nicht fungibler Token (NFT) erstellt wird, der in seinen Metadaten diesen Hash und den Verweis auf einen Speicherort der Kennzeichnungsinformation enthält, vorzugsweise in einem verteilten Dateisystem (DFS) wie dem Interplanetares Dateisystem (IPFS).

10. Verfahren nach einem der Ansprüche 1 bis 9, wobei in Schritt C mindestens ein Teil der Kennzeichnungsinformation, die in Schritt B erfasst wird, komprimiert, verschlüsselt und in einem Benutzerspeicher jedes der Transponder (110) gespeichert wird.

11. Verfahren nach einem der Ansprüche 1 bis 10, wobei in Schritt C eine digitalisierte biometrische Probe, die die Identität des Autors des Produkts (100) belegt, gespeichert wird und optional in der Blockkette nach Anspruch 9 und/oder in dem Benutzerspeicher nach Anspruch 10 gespeichert wird.

12. Verfahren nach Anspruch 11, wobei die digitalisierte biometrische Probe, die die Identität des Autors des Produkts (100) belegt, eines der folgenden Elemente umfasst:
mindestens ein Teil des digitalisierten genetischen Codes des Autors des Produkts, eine komprimierte und verschlüsselte Version desselben, den Hashcode von mindestens einem Teil des digitalisierten genetischen Codes.

13. Verfahren nach einem der Ansprüche 1 bis 12, wobei in den Schritten B und D eine Mehrzahl von Antennen (AN1, AN2, AN3; ANT1, ANT2) verwendet wird, die während der Durchführung der zwei Schritte bekannte gegenseitige Positionen haben, und wobei die gegenseitige Position der Transponder (110) durch die Nähe zu der Antenne oder auf dem RSSI basierte Trilateration erhalten wird, wobei die gegenseitigen Positionen in die Kennzeichnungsinformation und die Überprüfungsinformation enthalten werden.

14. Verfahren nach einem der Ansprüche 1 bis 13, wobei in Schritt G mindestens ein Teil der Kennzeichnungsinformation, die in Schritt B erhalten wird, aus dem Benutzerspeicher der Transponder (110) nach Anspruch 10 gelesen wird und mit mindestens einem Teil der Überprüfungsinformation, die in Schritt D erhalten wird, verglichen wird.

15. System zur eindeutigen Produktkennzeichnung, umfassend:
- eine Dispersion von Transpondern (110), die auf eine Oberfläche eines Produkts (100) angebracht werden kann, oder ein Etikett, das auf das Produkt angebracht werden kann;
- mindestens eine RFID-Antenne (130);
- mindestens eine Verarbeitungseinheit;
**dadurch gekennzeichnet, dass** die Verarbeitungseinheit dazu konfiguriert ist, die Kennzeichnungsinformation des Produkts (100), die in Schritt B erfasst wird, nach dem Verfahren nach einem oder mehreren der Ansprüche 1 bis 14 zu empfangen und zu speichern sowie die Anwesenheit der Überprüfungsinformation, die in Schritt D erhalten wird, mit demselben Informationstyp innerhalb der Kennzeichnungsinformation zu empfangen und zu überprüfen.

16. System nach Anspruch 15, wobei eine Kamera enthalten ist, die dazu konfiguriert ist, ein Bild des Produkts an einer Reihe von Abtastpositionen auf der Oberfläche des Produkts (100) zu erhalten.

17. System nach Anspruch 15 oder 16, wobei die Verarbeitungseinheit dazu konfiguriert ist, einen Hash von mindestens einem Teil der Kennzeichnungsinformation zu berechnen und zu speichern und ein NFT in einer Blockkette zu erstellen, so dass dieser in seinen Metadaten den Hash und einen Verweis auf eine Speicherposition der Kennzeichnungsinformation enthält, vorzugsweise in einem verteilten Dateisystem (DFS), wie dem Interplanetares Dateisystem (IPFS).

18. System nach einem oder mehreren der Ansprüche 15 bis 17, wobei ein oder mehrere Systeme zum Erkennen der Position der Antenne (130) vorgesehen sind.

## Revendications

1. Procédé de vérification de l'authenticité d'un produit et éventuellement de l'identité d'un auteur, comprenant les étapes suivantes :
A. application (210) sur au moins une surface d'un produit (100) d'une dispersion de transpondeurs (110) ou application d'une étiquette sur la surface à laquelle la dispersion de transpondeurs (110) a été précédemment appliquée ;
B. caractérisation (220) de ladite surface dudit produit ou de ladite étiquette en déplaçant au moins une antenne (130) vers au moins une partie de ladite surface du produit ou de l'étiquette afin de balayer au moins un sous-ensemble desdits transpondeurs (110), acquisition d'une information de caractérisation qui comprend pour chaque transpondeur (110) au moins l'identifiant du transpondeur et la position du transpondeur par rapport à un système de référence prédéfini ;
C. stockage (230) dans une unité de mémoire de ladite information de caractérisation acquise à l'étape B, comme un modèle d'information de caractérisation du produit ;
D. acquisition (240), par balayage d'au moins une zone d'au moins une partie de ladite surface du produit ou de l'étiquette, où au moins une partie de la dispersion de transpondeurs (110) appliquée à l'étape A est présente, en déplaçant ladite au moins une antenne (130) vers la surface dudit produit (100), de l'information de caractérisation de l'étape B, obtenant ainsi une information de vérification ;
E. stockage (250) de ladite information de vérification acquise à l'étape D, relative audit produit, dans un modèle de vérification d'authenticité du produit ;
F. recherche (260) dudit modèle de vérification d'authenticité dans ledit modèle d'information de caractérisation, à l'intérieur d'une marge de déviation prédéfinie ; et
G. génération (280) d'une information numérique sur l'identité et l'authenticité du produit (100) et éventuellement sur l'identité de l'auteur, en fonction d'un résultat positif ou négatif de l'étape F.

2. Procédé selon la revendication 1, dans lequel ladite information de caractérisation comprend en outre une indication d'intensité du signal reçu (RSSI).

3. Procédé selon la revendication 1 ou 2, dans lequel ladite information de caractérisation comprend un ou plusieurs des éléments suivants : une mémoire EPC (Electronic Product Code), une mémoire TID (Tag Identification), une mémoire utilisateur, une vitesse de lecture, un temps de réponse.

4. Procédé selon une ou plusieurs des revendications 1 à 3, dans lequel, à l'étape C et à l'étape E, le modèle d'information de caractérisation et le modèle de vérification d'authenticité du produit comprennent pour chaque transpondeur une indication de distance de chaque transpondeur (110) par rapport aux autres transpondeurs, et les étapes suivantes sont réalisées :
division de l'ensemble des transpondeurs en tous les sous-groupes composés de M éléments, M étant supérieur ou égal à 2 et inférieur au nombre total de transpondeurs sur la surface du produit ou de l'étiquette ;
pour chaque sous-groupe, calcul de la moyenne des distances entre les transpondeurs du sous-groupe ;
sélection des sous-groupes avec une moyenne de distance la plus élevée, au-dessus d'un seuil prédéfini, en veillant à ce que chacun des transpondeurs détectés apparaisse dans au moins M sous-groupes ;
stockage des moyennes des distances pour chacun des sous-groupes choisis à l'étape précédente dans ledit modèle d'information de caractérisation à l'étape C et dans ledit modèle de vérification d'authenticité à l'étape E.

5. Procédé selon une des revendications 1 à 4, dans lequel ladite position du transpondeur est calculée comme une moyenne des positions du transpondeur détectées à chaque position d'antenne pour chaque identifiant de transpondeur.

6. Procédé selon une des revendications 1 à 5, dans lequel, à l'étape A, le produit (100) est constitué d'un support sur lequel une œuvre d'art est réalisée.

7. Procédé selon une des revendications 1 à 6, dans lequel, à l'étape A, la dispersion de transpondeurs est obtenue en mélangeant aléatoirement une pluralité de transpondeurs (110) avec une substance de liaison, de sorte que, après une étape de séchage, la position des transpondeurs soit stable dans le temps.

8. Procédé selon une des revendications 1 à 7, dans lequel, aux étapes B et D, les informations RGBD de couleur et de profondeur dudit produit (100), acquises lors du balayage au moyen d'une caméra pour chaque position balayée du produit, sont ajoutées à l'information de caractérisation et à l'information de vérification.

9. Procédé selon une des revendications 1 à 8, dans lequel, à l'étape C, le stockage est effectué dans une blockchain, en hachant au moins une partie de l'information de caractérisation obtenue à l'étape B, puis en créant un jeton non fongible (NFT) de manière à contenir dans ses métadonnées ledit hachage et la référence à un emplacement de stockage de ladite information de caractérisation, de préférence sur un système de fichiers distribué (DFS), tel que le système de fichiers interplanétaire (IPFS).

10. Procédé selon une des revendications 1 à 9, dans lequel, à l'étape C, au moins une partie de l'information de caractérisation acquise à l'étape B est compressée, chiffrée et stockée dans une mémoire utilisateur de chacun des transpondeurs (110).

11. Procédé selon une des revendications 1 à 10, dans lequel, à l'étape C, un échantillon biométrique numérisé prouvant l'identité de l'auteur du produit (100) est stocké, et est éventuellement stocké dans la blockchain selon la revendication 9 et/ou dans la mémoire utilisateur selon la revendication 10.

12. Procédé selon la revendication 11, dans lequel ledit échantillon biométrique numérisé prouvant l'identité de l'auteur du produit (100) comprend l'un des éléments suivants : au moins une partie du code génétique numérisé dudit auteur dudit produit, une version compressée et chiffrée de celui-ci, le code de hachage d'au moins une partie dudit code génétique numérisé.

13. Procédé selon une des revendications 1 à 12, dans lequel, aux étapes B et D, une pluralité d'antennes (AN1, AN2, AN3 ; ANT1, ANT2) est utilisée, ayant des positions mutuelles connues lors de l'exécution des deux étapes, et dans lequel la position mutuelle des transpondeurs (110) est obtenue par proximité de l'antenne ou par trilatération basée sur le RSSI, les positions mutuelles étant incluses dans ladite information de caractérisation et ladite information de vérification.

14. Procédé selon une des revendications 1 à 13, dans lequel, à l'étape G, au moins une partie de l'information de caractérisation obtenue à l'étape B est lue à partir de la mémoire utilisateur des transpondeurs (110) selon la revendication 10 et comparée à au moins une partie de l'information de vérification obtenue à l'étape D.

15. Système de caractérisation univoque de produit, comprenant :
une dispersion de transpondeurs (110) applicable à une surface d'un produit (100) ou une étiquette applicable au produit ;
au moins une antenne RFID (130) ; au moins une unité de traitement ;
**caractérisé en ce que** ladite unité de traitement est configurée pour recevoir et stocker ladite information de caractérisation, acquise à l'étape B, dudit produit (100) selon le procédé d'une ou plusieurs des revendications 1 à 14, ainsi que pour recevoir et vérifier la présence de l'information de vérification, obtenue à l'étape D, avec le même type d'information au sein de ladite information de caractérisation.

16. Système selon la revendication 15, comprenant une caméra configurée pour obtenir une image dudit produit à un ensemble de positions de balayage sur la surface dudit produit (100).

17. Système selon la revendication 15 ou 16, dans lequel ladite unité de traitement est configurée pour calculer et stocker un hachage d'au moins une partie de l'information de caractérisation et pour créer un NFT dans une blockchain, de sorte qu'il contienne, dans ses métadonnées, ledit hachage et une référence à une position de stockage de ladite information de caractérisation, de préférence sur un système de fichiers distribué (DFS), tel que le système de fichiers interplanétaire (IPFS).

18. Système selon une ou plusieurs des revendications 15 à 17, dans lequel un ou plusieurs systèmes de détection de la position de l'antenne (130) sont prévus.
